# EUROPÄISCHE PATENTSCHRIFT

(11) **EP 0 413 896 B1**
(45) Veröffentlichungstag und Bekanntmachung des Hinweises auf die Patenterteilung: **04.05.1994**
(21) Anmeldenummer: 90106100.2
(22) Anmeldetag: 30.03.1990
(51) Int. Cl.: B65D 41/06, B60K 15/04

(54) **Verschluss zum lösbaren Verschliessen einer rohrförmigen Öffnung**
Cover for the detachable closing of a tubular outlet
Fermeture ouvrable pour obturer une ouverture tubulaire

(30) Priorität: 18.08.1989 DE 3927325
(43) Veröffentlichungstag der Anmeldung: 27.02.1991
(73) Patentinhaber: FILTERWERK MANN & HUMMEL GMBH, D-71631 Ludwigsburg (DE)
(72) Erfinder: Bauer, Sascha, D-7159 Auenwald 1 (DE)
(74) Vertreter: Voth, Gerhard, Dipl.-Ing.

(56) Entgegenhaltungen:
- EP-A- 0 020 987
- DE-B- 2 113 106
- US-A- 3 415 410
- US-A- 4 494 669
- US-A- 4 666 057

## Beschreibung

Die Erfindung betrifft einen Verschluß zum lösbaren Verschließen einer rohrförmigen Öffnung nach dem Oberbegriff des Hauptanspruchs. Es ist bekannt, beispielsweise zum Verschließen eines Kraftstofftankes einen Deckel vorzusehen, der mit einem Bajonettverschluß versehen ist. Das gleiche Prinzip kann auch bei beliebig anderen rohrförmigen Öffnungen, beispielsweise auch bei Öleinfüllstutzen vorgesehen werden. Üblicherweise enthält der Deckel einen Dichtring, so daß eine auslaufsichere Abdichtung der Öffnung gewährleistet ist.

Es hat sich gezeigt, daß vor allem bei Verschlüssen, die nur sehr selten geöffnet werden, der Dichtring, welcher normalerweise aus Gummi besteht, sehr stark an der Dichtfläche der rohrförmigen Öffnung anhaftet. Selbst wenn es sich hier um einen Öleinfüllstutzen handelt und durch das eingefüllte Öl eine Benetzung des Dichtringes stattfindet, ändert dies nichts an der Haftung des Dichtringes an dem beispielsweise aus Kunststoff bestehenden Öleinfüllstutzen. Das Aneinanderhaften dieser Teile führt dazu, daß sich der Deckel nicht oder nur äußerst schwer lösen läßt, da beim Lösen des Deckels die Haftkräfte durch Scherkräfte, die durch das Drehen des Deckels aufzubringen sind, überwunden werden müssen.

Aus der EP-A-0 020 987 ist ein Verschluß bekannt, bei dem eine topfförmige Kappe vorgesehen ist, deren lichter Innendurchmesser dem Außendurchmesser der zu verschließenden Öffnung entspricht, wobei zum Verschließen diese topfförmige Kappe durch eine Klemmeinrichtung in ihrem Durchmesser reduziert wird. Die Klemmeinrichtung besteht aus radial wirkenden Stegen, die über eine Drehhülse von einer Ausgangslage in eine Verschlußstellung gebracht werden. Das Öffnen erfolgt durch Betätigen der Drehhülse in umgekehrter Richtung, dadurch bewegen sich die Stege in die Ausgangslage zurück und geben die Öffnung frei. Ein Nachteil dieser Verschlußart besteht jedoch darin, daß zum Aufbringen der radialen Bewegung an den Stegen Filmscharniere erforderlich sind, die bei unsachgemäßer Handhabung leicht beschädigt werden können. Außerdem besteht die Gefahr, daß bei sehr hohen bzw. sehr niederen Umgebungstemperaturen, aufgrund der Eigenschaften des Kunststoffes, die Funktionssicherheit des Verschlusses beeinträchtigt wird.

Aus der DE-B-21 13 106 ist eine Vorrichtung zum Verschließen von Ausgußstutzen von Kanistern bekannt. Diese Vorrichtung weist ein Überwurfteil auf, in welches ein drehbar gelagertes Dichtteil angeordnet ist. Überwurfteil und Dichtteil sind mit einem Druckknopf als zusätzliches Element miteinander verschnappt. Dieser Druckknopf ist als weiteres Element unbedingt erforderlich und weist noch die Funktion einer Verliersicherung für den Deckel auf. Diese Verliersicherung ist aber nicht nötig, da der Deckel, welcher ein Kunststoffspritzgußteil ist, unmittelbar mit der Verliersicherung verbunden sein kann, zumal diese nur um etwa 20 Grad gedreht werden muß.

Es ist weiterhin aus der USA-A-4 666 057 ein Verschluß mit einem Deckelteil und einem Innenteil bekannt. An dem Innengewinde des Deckelteils ist eine Flachdichtung angeordnet. Diese soll ein Herausfallen des Innenteils aus dem Deckelteil verhindern. Die Praxis zeigt, daß solche Verschlüsse, bei denen eine Flachdichtung gleichzeitig noch als Sicherung eines Teils genutzt wird, nicht zuverlässig arbeiten. Vor allem bei längerer Benutzung eines solchen Verschlusses besteht die Gefahr, daß die Flachdichtung ihre Sicherungswirkung verliert und damit das Innenteil aus dem Deckelteil herausfällt und der Verschluß untauglich wird.

Der Erfindung liegt deshalb die Aufgabe zugrunde, einen Verschluß zu schaffen, welcher robust aufgebaut ist, aus wenigen Teilen besteht und welcher sich auch nach einer längeren Phase, in der der Verschluß nicht betätigt wurde, problemlos öffnen läßt, sowie geeignet ist, ein Aufsetzen des Deckels auf eine Öffnung zu erleichtern.

Diese Aufgabe wird, ausgehend von den gattungsgemäßen Merkmalen des Hauptanspruchs durch dessen kennzeichnende Merkmale gelöst.

Die Lösung zeichnet sich durch einen unkomplizierten Aufbau auf, der gerade wegen seiner Einfachheit funktionssicher ist, und zwar bezüglich der Abdichtung der rohrförmigen Öffnung als auch bezüglich des leichten, problemlosen Öffnen des Verschlusses.

Die Führungsfläche des Innenteils hat den Vorteil, daß beim Aufsetzen des Deckels auf die Öffnung eine Zentrierung erfolgt.

Durch die Anordnung eines Innenteils, welches sich gegenüber dem Deckelteil verdrehen läßt, wird eine Entkopplung der Drehbewegung des Deckelteils von der axialen Abdichtung erzielt. Dies bedeutet, daß es nicht mehr erforderlich ist, den Dichtring, der ein zuverlässiges Abdichten allein durch die axiale Anpreßkraft gewährleistet, auf der abzudichtenden Fläche zu verdrehen, was zu einem Aufreiben des Dichtringes führen würde.

Die Schnappverbindung von Deckelteil und Innenteil verbindet beide Teile unlösbar. Die Schnappverbindung ist aber so ausgestaltet, daß zwar eine Entlüftung der rohrförmigen Öffnung möglich ist, jedoch ein Austritt von Flüssigkeit, beispielsweise von Öl, bis zu einer bestimmten Schräglage wirksam verhindert wird. Zur Verbesserung dieser Wirkung der Flüssigkeitssperre kann gemäß einer Weiterbildung auch zwischen dem Deckelteil und dem Innenteil eine Labyrinthdichtung vorgesehen sein. Diese Labyrinthdichtung ist zweckmäßigerweise mit einer Flüssigkeitsrücklauföffnung versehen. Durch diese Maßnahme ist gerade bei der Verwendung des Verschlusses an einem Öleinfüllstutzen gewährleistet, daß ein Austritt des Öls über den Entlüftungsweg nicht möglich ist. Sofern eine Entlüftung des Innenraums nicht erwünscht ist, kann das Innenteil selbstverständlich auch als eine völlig dichte Abdeckplatte ausgebildet sein.

Zwischen dem Innenteil und dem Deckelteil befinden sich zur Übertragung der axialen Kräfte Stützflächen. Diese Stützflächen können beispielsweise als eine oder mehrere Ringflächen ausgebildet sein und weisen gute Gleiteigenschaften auf. Es besteht außerdem die Möglichkeit, durch Einlegen eines Gleitringes zwischen den Stützflächen die Gleitwirkung zu erhöhen.

Gerade die Verwendung von thermoplastischem Kunststoff sowohl für das Deckelteil als auch für das Innenteil wirkt sich sehr günstig auf die Gleiteigenschaften aus, d. h. das Deckelteil gleitet beim Verschließen mittels des Bajonettverschlusses auf dem Innenteil, ohne daß die Gefahr besteht, daß das Innenteil durch die Drehbewegung des Deckelteils mitgenommen wird. Außerdem trägt auch der relativ hohe Reibkoeffizient zwischen dem Dichtring und der rohrförmigen Öffnung sowie zwischen dem Dichtring und dem Innenteil dazu bei, daß das Innenteil in seiner relativen Lage zu der rohrförmigen Öffnung verharrt.

Sofern eine Entlüftung des Innenraumes nicht erwünscht ist, kann das Innenteil selbstverständlich auch als eine völlig dichte Abdeckplatte ausgebildet sein.

Gemäß einer Weiterbildung der Erfindung besteht auch die Möglichkeit, eine formschlüssige Verbindung zwischen der rohrförmigen Öffnung und dem Innenteil zur Absicherung der Lage des Innenteils vorzusehen. Hierzu weist die Öffnung einen Ansatz auf. Das Innenteil ist in diesem Fall mit einer Verzahnung versehen, die beim Aufsetzen des Deckels auf die Öffnung mit dem Ansatz in Eingriff gebracht wird. Diese Ausgestaltung der Erfindung ist dann zweckmäßig, wenn durch die Verwendung eines Dichtringes aus einem besonderen Werkstoff nicht sichergestellt ist, daß der Reibkoeffizient zwischen Dichtring und Öffnung größer ist als der Reibkoeffizient zwischen dem Innen- und dem Deckelteil.

Eine weitere Ausgestaltung der Erfindung sieht vor, das Innenteil so zu bemessen, daß beim Aufsetzen des Deckels auf die Öffnung eine Zentrierung erfolgt. Dies wird dadurch erreicht, daß das Innenteil in seiner axialen Länge größer als das Deckelteil ist und somit beim Aufsetzen des Deckels zunächst in die Öffnung eingreift und aufgrund seines Außendurchmessers den Verschluß auf der rohrförmigen Öffnung zentriert.

Weitere vorteilhafte Ausgestaltungen sind in der Figurenbeschreibung enthalten.

Die Erfindung wird nachfolgend anhand von Ausführungsbeispielen näher erläutert. Es zeigt
- Figur 1: einen Halbschnitt durch einen Verschluß eines Öleinfüllstutzens,
- Figur 2: eine Variante des in Figur 1 gezeigten Verschlusses,
- Figur 3: den in Figur 2 gezeigten Verschluß in zwei weiteren Ansichten,
- Figur 4: eine Detaildarstellung des in den Figuren 2 und 3 gezeigten Verschlusses.

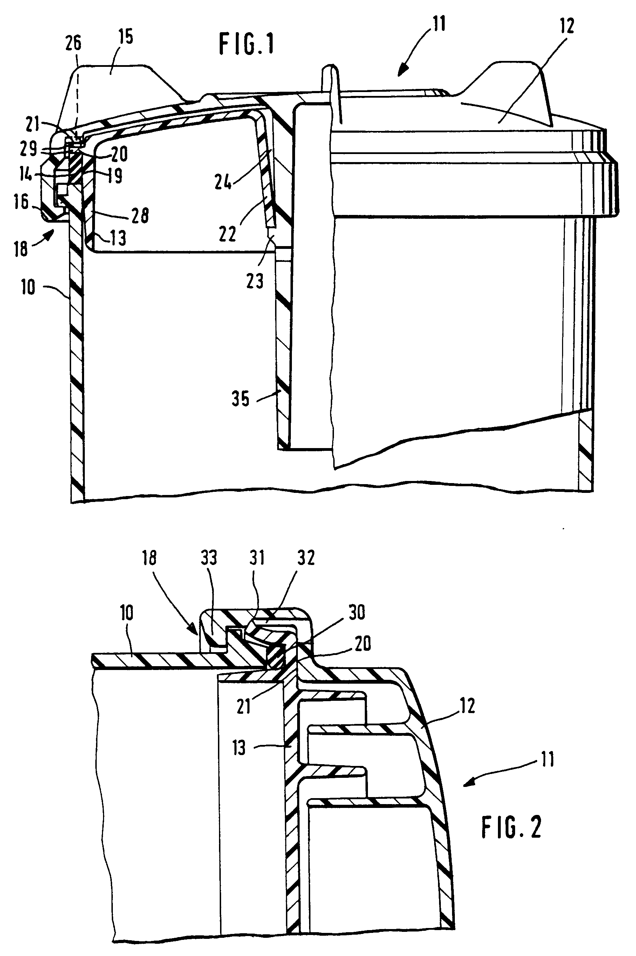

Der Verschluß gemäß Figur 1 dient zum Verschließen eines Öleinfüllstutzens, insbesondere zum Verschließen des Einfüllstutzens für den Hydraulikölbehälter der Lenkhilfe eines Kraftfahrzeugs. Es ist bekannt, daß ein solcher Verschluß nur sporadisch geöffnet wird, um den Ölstand zu kontrollieren. Bleibt jedoch ein solcher und bisher üblicherweise verwendeter Verschluß sehr lange geschlossen, dann nimmt die Adhäsion zwischen der Dichtung und dem zu verschließenden Stutzen so zu, daß die unmittelbar am Deckel angeordnete Dichtung ein Drehen des Deckels nicht oder nur unter Zuhilfenahme von Werkzeugen zuläßt. Selbst die Einwirkung des in dem Einfüllstutzen vorhandenen Öls kann die Lösekräfte nicht verringern.

Der in Figur 1 gezeigte Verschluß läßt sich demgegenüber leicht öffnen, da die aufzubringende axiale Bewegung von der Drehbewegung entkoppelt ist.

Die Figur zeigt einen Öleinfüllstutzen bzw. den oberen Abschluß eines Behälters 10. Dieser Öleinfüllstutzen 10 ist mit dem Verschluß 11, bestehend aus einem Deckelteil 12, einem Innenteil 13 und einem Dichtring 14 verschlossen. Das Deckelteil 12 weist Grifflächen 15 auf, mit welchen der Deckel gehalten und gedreht werden kann. Außerdem sind am äußeren Umfang des Deckelteils hakenförmige Elemente 16 angeordnet, die in Verbindung mit Auskragungen 17 den Bajonettverschluß 18 bilden. Das Innenteil 13 trägt an seinem äußeren Umfang den Dichtring 14. Dieser besteht beispielsweise aus Weichgummi und wird in axialer Richtung durch eine Ringfläche 19 an dem Innenteil 13 gehalten. Oberhalb dieser Ringfläche 19 ist eine Gleitfläche 20 vorgesehen. Diese Gleitfläche 20 ist in Kontakt mit einer Gleitfläche 21, welche sich an dem Deckelteil 12 befindet. Sowohl das Deckelteil 12 als auch das Innenteil 13 bestehen aus glasfaserverstärktem Polyamid. Dieser Kunststoff weist relativ günstige Gleiteigenschaften auf und ist deshalb zur Bildung von Gleitflächen geeignet.

Das Innenteil 13 enthält ein konisch zulaufendes Rohr 22, welches über eine Nase 23 an dem Deckelteil 12 eingeschnappt ist. Die Schnappverbindung kann sowohl als lösbare als auch als unlösbare Verbindung hergestellt werden. Da das Rohr 22 einen geringen Spalt zu dem Deckelteil 12 bildet, kann ein evtl. in den Zwischenraum 24 gelangtes Öl zwischen dem Rohr und dem Deckelteil hindurch in den Ölbehälter zurückfließen.

Zum Ausgleich von Luftdruckänderungen kann die in dem Ölbehälter befindliche Luft ungehindert durch diesen Spalt nach außen gelangen. Zur Vermeidung eines Luftstaus an den Gleitflächen 20, 21 ist ein - hier gestrichelt gezeigter - weiterer Spalt 26 vorgesehen.

In der hier gezeigten Figur ist der Öleinfüllstutzen durch den Verschluß 11 verschlossen. Ein Drehen des Deckelteils 12 bewirkt ein Öffnen des Bajonettverschusses 18. Bei dieser Drehung gleitet das Deckelteil 12 mittels der Gleitflächen 20, 21 auf dem Innenteil 13. Das Innenteil verharrt daher bei dieser Drehbewegung in der gezeigten Position. Erst beim Anheben des Deckelteils 12 wird das Innenteil 13 mit angehoben und der Öleinfüllstutzen geöffnet. Es ist damit ersichtlich, daß auf den Dichtring 14 keinerlei Scherkräfte einwirken. Außerdem müssen die Adhäsionskräfte des Dichtringes an dem Öleinfüllstutzen 10 nicht durch eine Drehbewegung überwunden werden, sondern lassen sich durch einfaches und wesentlich geringere Kräfte erforderndes Abheben des Verschlusses überwinden.

Das Innenteil 13 weist an seinem äußeren Umfang eine Wandung 28 auf, die relativ weit in den Öleinfüllstutzen hineinragt. Diese Wandung 28 hat den Zweck, beim Aufsetzen des Verschlusses 11 auf den Öleinfüllstutzen eine Zentrierung des Verschlusses zu bewirken. Damit wird ein Verkanten oder fehlerhaftes Aufschrauben des Bajonettverschlusses vermieden.

Die in Figur 2 gezeigte Variante eines Verschlusses besteht ebenfalls im wesentlichen aus zwei Teilen, dem Deckelteil 12 und dem Innenteil 13. Das Deckelteil 12 ist auch hier mit einem Bajonettverschluß 18 an dem Öleinfüllstutzen 10 befestigt. Das Deckelteil 12 ist an seinem Umfang mit einer Grifffläche versehen, die ein leichtes Öffnen des Deckels gewährleistet. In das Innenteil 13 ist ein Dichtring in Form eines O-Rings 30 eingelegt. Zwischen Deckelteil 12 und Innenteil 13 befinden sich die Gleitflächen 20, 21 im Durchmesserbereich des O-Rings. Es hat sich als zweckmäßig erwiesen, die Gleitflächen in diesem Durchmesserbereich anzuordnen, da hier die axiale Kraft auf die Abdichtung wirken soll. Dadurch werden zu große innere Spannungen in den Kunststoffteilen vermieden.

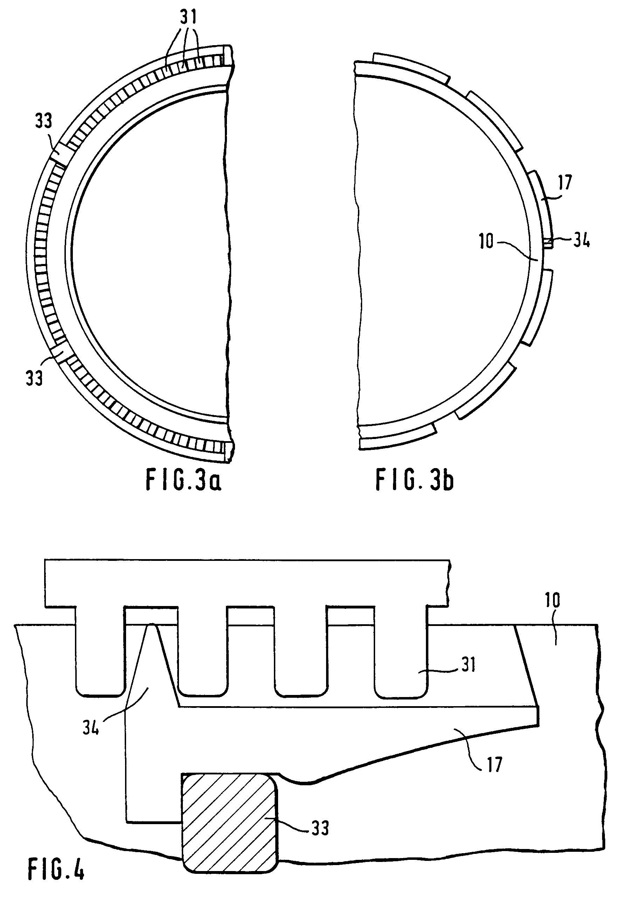

Wie in Figur 3 dargestellt, weist das Innenteil 13 nach außen gerichtete Zähne 31 auf. Diese Zähne sind als Schnappelemente ausgebildet und rasten beim Einfügen des Innenteils in das Deckelteil in eine umlaufende Nut 32 des Deckelteils 12 ein. Damit trotz der Nasen 33 des Deckelteils 12, welche einen Teil des Bajonettverschlusses bilden, das Innenteil 13 montiert werden kann, sind am Umfang jeweils einige Zähne - wie in der Figur dargestellt - ausgespart.

Figur 3b zeigt eine Draufsicht auf den Öleinfüllstutzen 10 mit den Auskragungen 17 des Bajonettverschlusses. An einer Stelle des Umfangs des Öleinfüllstutzens ist ein keilförmiges Element 34 angeordnet. In einer Detaildarstellung gemäß Figur 4 ist dieses keilförmige Element 34 deutlich zu erkennen als ein Bestandteil einer Auskragung 17. Wird der Verschluß 11 auf den Öleinfüllstutzen 10 aufgesetzt, dann greifen die Zähne 31, wie in Figur 4 gezeigt, über das Element 34, so daß hier noch zusätzlich eine Verdrehsicherung des Innenteils 13 gebildet wird.

Zur Überwachung des in dem Ölbehälter befindlichen Öles kann in der zylindrischen Öffnung 35 des Deckelteils 12 eine elektrische Füllstandsmeßeinrichtung angeordnet sein. Das Signal dieser Meßeinrichtung kann über ein Kabel an eine Anzeigeeinrichtung geführt werden.

## Patentansprüche

1. Verschluß zum lösbaren Verschließen einer rohrförmigen Öffnung, insbesondere eines Öleinfüllstutzens, mit einem Deckelteil, welches auf der rohrförmigen Öffnung mittels eines Bajonettverschlusses befestigt ist, und ein Dichtring aus Gummi oder gummiähnlichem Material zur Abdichtung der Öffnung vorgesehen ist, mit einem Innenteil, welches konzentrisch in dem Deckelteil angeordnet und gegenüber diesem drehbar ist und an dem Innenteil der Dichtring befestigt ist, wobei sich das Innenteil in axialer Richtung an dem Deckelteil über Stützflächen abstützt, dadurch gekennzeichnet, daß das Innenteil (13) und das Deckelteil (12) zur unmittelbaren Verbindung, über eine Schnappverbindung (22) ausgebildet sind, wobei das Innenteil (13) in Richtung der rohrförmigen Öffnung (10) länger als das Deckelteil (12) ist und die das Deckelteil überragende Länge des Innenteils eine Führungsfläche (28) zum Zentrieren des Verschlusses auf der rohrförmigen Öffnung bildet.

2. Verschluß nach Anspruch 1, dadurch gekennzeichnet, daß die Stützflächen als Gleitflächen (20, 21) ausgebildet sind.

3. Verschluß nach Anspruch 1, dadurch gekennzeichnet, daß zwischen den Stützflächen wenigstens ein Gleitring angeordnet ist.

4. Verschluß nach einem der vorhergehenden Ansprüche, dadurch gekennzeichnet, daß zwischen Deckelteil (12) und Innenteil (13) eine Labyrinthdichtung vorgesehen ist zur Verhinderung des Eindringens von Flüssigkeit in den Zwischenraum zwischen den genannten Teilen, und daß das Innenteil (13) eine der rohrförmigen Öffnung (10) zugewandte Flüssigkeitsrücklauföffnung aufweist.

5. Verschluß nach einem der vorhergehenden Ansprüche, dadurch gekennzeichnet, daß die rohrförmige Öffnung (10) wenigstens ein keilförmiges Element (34) aufweist und das Innenteil (13) eine Verzahnung (31) aufweist, welche beim Aufsetzen des Deckels auf die Öffnung (10) mit dem keilförmigen Element (34) in Eingriff gebracht wird und ein Verdrehen des Innenteils (13) beim Betätigen des Bajonettverschlusses verhindert.

6. Verschluß nach einem der vorhergehenden Ansprüche, dadurch gekennzeichnet, daß in einer zylindrischen Öffnung 35 des Deckelteils 12 eine Füllstandsmeßeinrichtung angeordnet ist.

## Claims

1. Closure for the detachable closing of a tubular aperture, more especially of an oil filler neck, including a cover member which is mounted on the tubular aperture by means of a bayonet-type securing means, a sealing ring which is formed from rubber or rubber-like material and is provided for the sealing of the aperture, and an inside part which is disposed concentrically in the cover member and is rotatable relative to said cover member, with the sealing ring being mounted on the inside part, the inside part being supported in an axial direction on the cover member by means of support faces, characterised in that the inside part (13) and the cover member (12) are configured to be directly connected via a snap connection (22), the inside part (13) being longer than the cover member (12) in the direction of the tubular aperture (10), and the length of the inside part, protruding beyond the cover member, forming a guide face (28) for the centering of the closure on the tubular aperture.

2. Closure according to claim 1, characterised in that the support faces are configured as slide faces (20, 21).

3. Closure according to claim 1, characterised in that at least one slide ring is disposed between the support faces.

4. Closure according to one of the preceding claims, characterised in that a labyrinth seal is provided between cover member (12) and inside part (13) to prevent fluid from entering the space between said component parts, and in that the inside part (13) has a fluid return aperture facing the tubular aperture (10).

5. Closure according to one of the preceding claims, characterised in that the tubular aperture (10) has at least one wedge-shaped component (34), and the inside part (13) has teeth (31) which engage with the wedge-shaped component (34) when the cover is mounted on the aperture (10) and prevent the inside part (13) from rotating when the bayonet-type securing means is actuated.

6. Closure according to one of the preceding claims, characterised in that a level measuring device is disposed in a cylindrical aperture (35) in the cover member (12).

## Revendications

1. Fermeture amovible, pour obturer une ouverture tubulaire, notamment celle d'une tubulure de remplissage d'un réservoir d'huile, comprenant un couvercle monté sur l'ouverture tubulaire par une fixation à baïonnette, un joint annulaire en caoutchouc ou matière analogue servant à obturer l'ouverture et une partie interne montée concentriquement dans le couvercle par rapport auquel il peut tourner et le joint annulaire est fixé sur cette partie interne s'appliquant axialement sur le couvercle par des portées d'appuis, caractérisée en ce que la partie interne (13) et le couvercle (12) sont reliés directement par l'intermédiaire d'un encliquetage (22), la partie interne (13) étant, selon la direction de l'ouverture tubulaire (10), plus longue que le couvercle (12) et constituant ainsi, par sa partie dépassant le couvercle, une surface de guidage (28) assurant le centrage de la fermeture sur l'ouverture tubulaire.

2. Fermeture selon la revendication 1, caractérisée en ce que les portées d'appui sont constituées par des surfaces de glissement (20, 21).

3. Fermeture selon la revendication 1, caractérisée en ce qu'au moins un anneau de glissement est intercalé entre les surfaces en appui.

4. Fermeture selon une des revendications précédentes, caractérisée en ce qu'un joint d'étanchéité à labyrinthe est intercalé entre le couvercle (12) et la partie interne (13) pour empêcher le liquide de pénétrer dans l'intervalle séparant les deux parties précédentes, et que la partie interne (13) comporte un orifice de retour du liquide en regard de l'ouverture tubulaire.

5. Fermeture selon une des revendications précédentes, caractérisée en ce que l'ouverture tubulaire (10) comporte au moins un élément (34) en forme de coin tandis que la partie interne (13) est équipée d'une denture (31) qui vient en prise avec l'élément (34) lorsqu'on place le couvercle sur l'ouverture (10) et empêche ainsi la pièce interne (13) de tourner lorsqu'on actionne la fermeture à baïonnette.

6. Fermeture selon une des revendications précédentes, caractérisée en ce que l'orifice cylindrique (35) du couvercle (12) est équipé d'un dispositif de mesure de remplissage.
